# DEMANDE DE BREVET EUROPEEN

(11) **EP 2 081 339 A1**
(43) Date de publication de la demande: **22.07.2009**
(21) Numéro de dépôt: 09290032.3
(22) Date de dépôt: 14.01.2009
(51) Int. Cl.: H04L 12/58, H04L 12/18, H04L 29/06

(54) **Procédé pour filtrer des messages dans un système de messagerie instantanée de terminaux mobiles, système de messagerie instantanée et serveur de mise en oeuvre de ce procédé**

(30) Priorité: 16.01.2008 FR 0850258
(71) Demandeur: Miyowa, 13002 Marseille (FR)
(72) Inventeur: Colon, François, F-13013 Marseille (FR)
(74) Mandataire: Novagraaf IP

(57) **Abrégé**

Procédé pour filtrer des messages dans un système de messagerie instantanée pour terminaux mobiles, ledit système comportant un serveur de messagerie instantanée (S) gérant l'échange de messages entre des clients équipés de terminaux mobiles et d'autres utilisateurs (B, C, D), ledit procédé se **caractérisant par le fait qu'**à la réception d'un message (MB, MC, MD) destiné au terminal mobile (TA) d'un client (A), le serveur de messagerie (S) analyse directement ledit message reçu et :
- si le message (MB) analysé contient une suite de caractères correspondant après comparaison à une suite spécifique, le serveur de messagerie instantanée transmet ce message vers le terminal mobile (TA) du client (A),
- si le message (MC, MD) analysé ne contient pas cette suite de caractères, le serveur de messagerie instantanée filtre ce message.

## Description

### Domaine technique de l'invention.

L'invention a pour objet un procédé pour filtrer des messages dans un système de messagerie instantanée de terminaux mobiles. Elle concerne également un système de messagerie instantanée ainsi qu'un serveur utilisé pour la mise en oeuvre de ce procédé.

L'invention concerne le domaine technique des messageries instantanées de terminaux mobiles et plus particulièrement le domaine technique de la filtration de tels systèmes de messagerie instantanée.

### État de la technique.

Dans les systèmes existants, des serveurs de messagerie instantanée sont aptes à délivrer des services de messagerie instantanée à des terminaux mobiles connectés aux dits serveurs et dont les clients ont ouvert une session de messagerie instantanée. Les serveurs de messagerie sont notamment configurés pour gérer l'échange de messages entre des clients équipés de terminaux mobiles et d'autres utilisateurs.

La messagerie instantanée sur terminal mobile permet à des clients de converser par messages écrits sans avoir besoin d'indiquer l'adresse du correspondant pour chaque message envoyé, comme c'est le cas pour les SMS. En principe, chaque client définit une liste de contacts (« *buddy list* ») avec qui il souhaite converser. La conversation ne peut se faire que si un ou plusieurs utilisateurs de la *« buddy list* » sont connectés au service de messagerie instantanée. Tous les messages écrits apparaissent en même temps sur les écrans du terminal mobile du client et des terminaux des utilisateurs inscrits sur la *« buddy list* » et connectés au service de messagerie instantanée. De cette manière, plusieurs personnes peuvent converser entre eux.

Pour gérer de manière efficace une conversation par messagerie instantanée, il est plus simple de ne converser qu'avec une partie seulement de ses contacts et filtrer les messages provenant d'utilisateurs avec lesquels on ne souhaite pas converser au moins momentanément. En effet, si tous les utilisateurs conversent en même temps, la conversation devient rapidement difficile à suivre, d'autant plus sur un terminal mobile.

Lorsqu'un client souhaite ouvrir une session de messagerie instantanée, une application informatique placée dans son terminal mobile émet une requête de présence à destination d'un serveur de messagerie. Ce dernier est alors apte à informer les autres utilisateurs de la « *buddy list* » de sa présence afin qu'ils puissent converser. Le client a la possibilité de gérer son statut en fonction d'un état de présence qu'il aura sélectionné et communiqué au serveur de messagerie. Pour limiter le nombre de personnes avec qui converser, le client peut par exemple indiquer au serveur de messagerie qu'il est disponible pour certains utilisateurs, mais qu'il ne souhaite pas être dérangé par d'autres utilisateurs. Ces derniers ne sont donc pas informés de la disponibilité du client et ne conversent pas avec lui.

Si des utilisateurs émettent tout de même des messages à destination du client - ce qui arrive fréquemment - le serveur de messagerie instantanée est généralement configuré pour transmettre des messages d'alerte (SMS, MMS, e-mail, ...) audit client. Et la réception de ces messages d'alerte peut perturber la tenue de la conversation que le client entretient avec les autres utilisateurs.

Pour limiter le nombre de personnes avec qui converser, chaque client peut également définir des règles de filtration de manière à bloquer les messages émis par des utilisateurs inscrits sur sa « *buddy list* », mais avec lesquels il ne souhaite pas converser. Les techniques de filtration sont connues de l'homme du métier. En principe, il s'agit de règles de filtration développées par les opérateurs de messagerie instantanée et intégrées dans leurs serveurs de messagerie instantanée existants. Généralement, le client envoie une requête de filtration au serveur de messagerie instantanée, destinée à indiquer que seuls les messages provenant de certains utilisateurs de sa « *buddy list* » peuvent lui être communiqué et que les messages provenant des autres utilisateurs de sa « *buddy list »* doivent être bloqués.
Un inconvénient de cette méthode réside dans le fait que la requête de filtration peut être longue à préparer selon le nombre de contacts inscrits sur la « *buddy list* ». De plus, le client peut se tromper en indiquant par erreur la filtration d'un utilisateur avec qui il souhaite en fait converser et inversement. Le risque d'erreur est d'autant plus grand que le client ne dispose généralement d'aucun moyen de vérification.

Les documents US 2004/0143632 et US 2004/0143633 décrivent un procédé de filtration de messagerie instantanée dont les restrictions sont associées à des codes privés. Ce procédé s'applique à des systèmes de messagerie pour terminaux mobiles. Un serveur de messagerie gère l'échange de messages entre des clients équipés de terminaux mobiles et d'autres utilisateurs. À la réception d'un message destiné au terminal mobile d'un client, le serveur de messagerie analyse sa base de données pour savoir si un code privé a été, au préalable, fourni par l'expéditeur du message. Si la base de données contient ce code privé, le serveur de messagerie transmet le message vers le terminal mobile du client. Si la base de données ne contient pas le code privé, le serveur de messagerie envoie une requête vers l'expéditeur afin que celui-ci fournisse le code privé. Si l'expéditeur fournit le bon code privé, alors le serveur de messagerie transmet le message vers le terminal mobile du client. Dans le cas contraire, le serveur de messagerie filtre ce message. Le serveur de messagerie instantanée, décrit dans les documents US 2004/0143632 et US 2004/0143633, n'analyse pas le message initial reçu mais est complexe et longue à mettre en oeuvre uniquement la réponse faite à sa requête.

Face à ces inconvénients, le problème technique principal que vise à résoudre l'invention est de proposer une nouvelle technique de filtration permettant à des clients de ne recevoir que les messages envoyés par les contacts avec qui ils souhaitent converser. Cette technique est basée sur l'analyse d'une séquence de caractère connue des utilisateurs autorisés.

L'invention a également pour objectif de simplifier la mise en oeuvre des règles de filtration dans un système de messagerie instantanée.

### Divulgation de l'invention.

La solution proposée par l'invention est un procédé pour filtrer des messages dans un système de messagerie instantanée pour terminaux mobiles, ledit système comportant un serveur de messagerie instantanée gérant l'échange de messages entre des clients équipés de terminaux mobiles et d'autres utilisateurs. Selon ce procédé, à la réception d'un message destiné au terminal mobile d'un client, le serveur de messagerie instantanée analyse directement le message reçu :
- et si le message analysé contient une suite de caractères correspondant après comparaison à une suite spécifique, le serveur de messagerie instantanée transmet ce message vers le terminal mobile du client
- si le message analysé ne contient pas cette suite de caractères, le serveur de messagerie instantanée filtre ce message ;
Avec cette solution, le client n'est plus tenu d'indiquer au serveur de messagerie quels sont les utilisateurs dont les messages doivent être filtrés et ceux dont les messages doivent être communiqués. Maintenant, seuls les utilisateurs qui connaissent la suite spécifique de caractères sont autorisés à converser avec le client, les autres verront leurs messages bloqués. Dans la suite de la description et dans le seul but de simplifier la compréhension de l'invention, le terme « suite *spécifique de caractère* » est remplacé par le terme « *mot magique* ».

Il peut arriver que le serveur de messagerie instantanée comporte déjà, pour au moins un client, une liste de contacts avec des règles de filtration associées. Dans ce cas, à la réception d'un message émis par un utilisateur inscrit sur la liste de contacts et à destination du terminal mobile du client, le serveur de messagerie instantanée peut interroger la liste de contacts pour vérifier si une règle de filtration est associée à cet utilisateur.

En cas de vérification positive, le serveur de messagerie analyse le message reçu pour déceler si le message reçu contient ou pas la suite spécifique de caractères et détermine ainsi s'il contient ou pas le « *mot magique* ». Si le message analysé contient le « *mot magique* », alors le serveur de messagerie le transmet au terminal mobile du client. Dans le cas contraire, le message est filtré. Cette caractéristique permet à un utilisateur connaissant le « *mot magique* » de converser avec le client même si une règle de filtration lui est initialement associée. On donne ainsi préférentiellement la priorité au « *mot magique* » plutôt qu'aux règles de filtration.

Dans le cas où le serveur de messagerie instantanée interroge la liste de contacts pour vérifier si une règle de filtration est associée à un utilisateur et en cas de vérification négative, ledit serveur de messagerie analyse le message reçu. Si le message analysé contient le « *mot magique* », le serveur de messagerie instantanée transmet ce message vers le terminal mobile du client. Si le message analysé ne contient pas le « *mot magique* », le serveur de messagerie le filtre.
Dans une variante de réalisation, dans le cas où le serveur de messagerie instantanée interroge la liste de contacts pour vérifier si une règle de filtration est associée à un utilisateur et en cas de vérification négative, ledit serveur transmet automatiquement ce message vers le terminal mobile du client. On donne ainsi préférentiellement la priorité à une absence de règle de filtration plutôt qu'au *« mot magique* ».

Selon une autre caractéristique avantageuse de l'invention permettant au client de choisir lui-même son « *mot magique* », le terminal mobile du client transmet au serveur de messagerie le « *mot magique* », ledit serveur stockant ce dernier dans une zone mémoire.

Pour avertir les utilisateurs dont les messages ont été filtrés, le serveur de messagerie instantanée peut avantageusement émettre un message d'avertissement à destination des terminaux desdits utilisateurs.

De même, pour avertir un client ayant clôturé sa session de messagerie instantanée qu'un message contenant le « *mot magique* » a été reçu par le serveur de messagerie, ce dernier peut émettre un message d'alerte à destination du terminal mobile dudit client si un message analysé contient le *« mot magique* ».

Un autre aspect de l'invention concerne un système de messagerie instantanée pour terminaux mobiles, comportant un serveur de messagerie instantanée configuré pour gérer l'échange de messages entre des clients équipés de terminaux mobiles et d'autres utilisateurs, ledit système étant remarquable en ce que le serveur de messagerie est équipé :
- d'un moyen pour analyser directement un message à destination du terminal mobile d'un client et comparer le contenu de ce message à une suite spécifique de caractères formant « mot magique »,
- d'un moyen pour transmettre ledit message analysé vers le terminal mobile du client si ledit message contient le *« mot magique* »,
- d'un moyen pour filtrer ledit message analysé si ledit message ne contient pas le *« mot magique* ».

Selon des modes de réalisation particulières :
- le serveur de messagerie (S) comporte :
   * pour au moins un client (A), une liste de contacts (2A) avec des règles de filtration associées,
   * un moyen pour interroger ladite liste de contacts (2A) et vérifier si une règle de filtration est associée à un utilisateur (B, C, D) inscrit sur ladite liste ayant émis un message (MB, MC, MD) à destination du terminal mobile (TA) du client (A),
   **et dans lequel** le moyen pour analyser ledit message (MB, MC, MD) est activé en cas de vérification positive ou négative ;
- le serveur de messagerie (S) comporte :
   * pour au moins un client (A), une liste de contacts (2A) avec des règles de filtration associées,
   * un moyen pour interroger ladite liste de contacts (2A) et vérifier si une règle de filtration est associée à un utilisateur (B) inscrit sur ladite liste ayant émis un message (MB) à destination du terminal mobile (TA) du client (A),
   **et dans lequel** le moyen pour transmettre ledit message (MB) vers le terminal mobile (TA) du client (A) est automatiquement activé en cas de vérification négative ;
- le terminal mobile (TA) du client (A) comporte un moyen pour transmettre au serveur de messagerie (S) la suite spécifique de caractères.
- le serveur de messagerie (S) comporte un moyen pour émettre un message d'avertissement (10C, 10D) à destination des terminaux (TC, TD) des utilisateurs (C, D) dont les messages (MC, MD) ont été filtrés.
- le serveur de messagerie (S) comporte un moyen pour émettre un message d'alerte (10A) à destination du terminal mobile (TA) du client (A), ledit moyen étant activé si un message analysé contient la suite spécifique de caractères et si ledit client a clôturé sa session de messagerie instantanée.

Encore un autre aspect de l'invention concerne un serveur de messagerie instantanée configuré pour gérer l'échange de messages entre des clients équipés de terminaux mobiles et d'autres utilisateurs, ledit serveur étant remarquable en ce qu'il intègre un module de traitement comportant :
- des instructions d'analyse directe les messages destinés au terminal mobile d'un client ;
- des instructions de commande de transmission des messages analysés vers le terminal mobile du client si lesdits messages contiennent le « *mot magique* »,
- des instructions de filtration des messages analysés s'ils ne contiennent pas le « *mot magique* ».

### Présentation des dessins.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 représente schématiquement un système de messagerie instantanée pour terminaux mobiles selon l'invention, et
- la figure 2 représente schématiquement, et dans une variante de réalisation, un système de messagerie instantanée pour terminaux mobiles selon l'invention dans lequel le client a déjà associé des règles de filtration à sa liste de contacts.

### Modes de réalisation de l'invention.

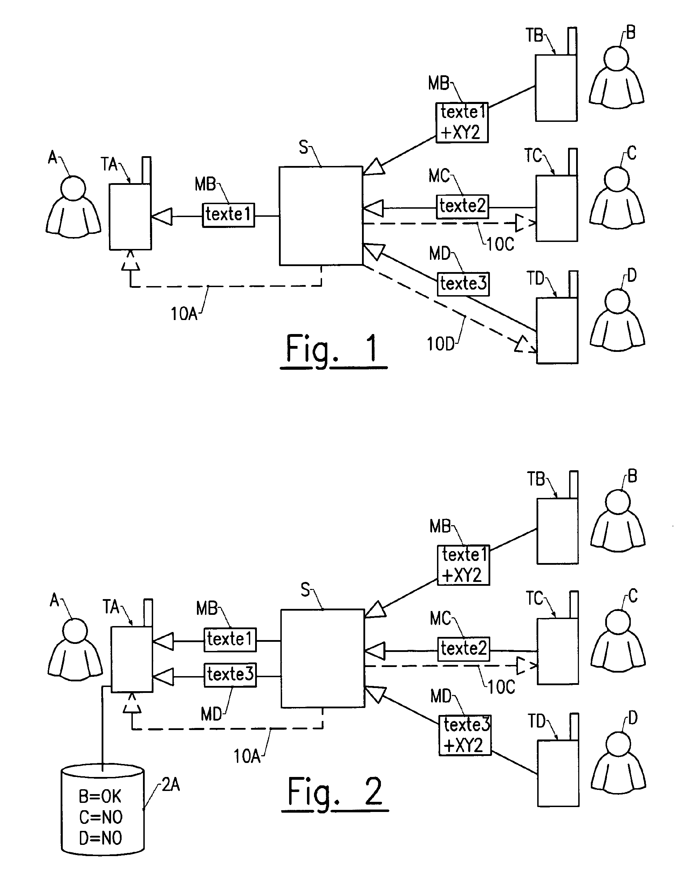

En se rapportant à la figure 1, le système de messagerie instantanée objet de l'invention comporte un serveur de messagerie instantanée S du type connu de l'homme du métier et capable de délivrer, à des terminaux auxquels il est connecté, des services de messageries instantanées basiques tels que gestion des échanges de messages, gestion des statuts de présence, etc.
En pratique, le serveur S est associé à une communauté de messagerie instantanée. Il est connecté à un réseau de communication (MSM®, Jabber®, Yahoo !®, ...) habituellement employé pour mettre en oeuvre les services de messagerie instantanée. D'une manière bien connu, ce serveur de messagerie est équipé d'un processeur, contrôleur ou de tout autre moyen équivalent permettant de gérer l'état de présence des différents utilisateurs et plus généralement, les différents événements intervenant dans le système.

Les terminaux mobiles des clients utilisés pour la mise en oeuvre de l'invention peuvent être des téléphones mobiles, des appareils du type assistant digital personnel (PDA), ou tout autre terminal mobile de communication apte à se connecter à un service de messagerie instantanée. Les terminaux mobiles TA sont configurés pour êtres connectés à un réseau de communication du type MSM®, Jabber®, Yahoo !®, etc. Ce type de terminal mobile TA est utilisé par le client A dans la suite de la description.

Les autres terminaux utilisés par les autres utilisateurs, sont aptes à se connecter au service de messagerie instantanée. Ils peuvent être mobiles du type téléphone mobile, assistant digital personnel (PDA) ou autre, mais également non mobiles tels que ordinateurs. Ce type de terminal TB, TC, TD est utilisé par les utilisateurs B, C, D dans la suite de la description. Ces derniers sont inscrits sur la liste de contact 2A ou « *buddy list* » du client A. Ils se connectent d'une manière classique au serveur de messagerie instantanée S pour ouvrir une session de messagerie instantanée et converser avec le client A.

En se rapportant à la figure 1, le serveur de messagerie S est connecté à au moins un terminal mobile TA d'un client A et aux terminaux TB, TC, TD d'autres utilisateurs B, C, D de manière à ce que les messages MB, MC, MD échangés transitent par ledit serveur durant la session. Les messages MB, MC, MD sont envoyés par les terminaux TB, TC, TD des utilisateurs B, C, D et transitent par un réseau de communication connu de l'homme du métier dans le domaine de la messagerie instantanée.

Les messages MB, MC, MD sont en principe des textes comportant une succession de mots et/ou de nombres. Conformément à l'invention, les utilisateurs B, C, D peuvent avoir connaissance d'un « *mot magique* » constitué d'une suite spécifique de caractères. Les caractères composant le « *mot magique* » sont en principe des lettres et/ou des chiffres et/ou des signes de ponctuation, et/ou des retours à la ligne, etc. En se rapportant à la figure 1, le « *mot magique* » est par exemple constitué d'une suite de lettres et de chiffres : « *XY2* ». Ce « *mot magique* » est en principe communiqué par le client A aux utilisateurs avec qui il souhaite pouvoir converser à tout moment. Le « *mot magique* » peut être communiqué aux utilisateurs par un message du type SMS, MMS, e-mail, ou autre et transite par un réseau de communication connu de l'homme du métier.
En se rapportant à l'exemple de la figure 1, seul l'utilisateur B a connaissance du « *mot magique* ». Ainsi lorsque l'utilisateur B rédige son message MB, il intégrera dans ledit message ce « *mot magique* ». Ce dernier peut être intégré au début, au milieu ou à la fin du message MB, à la convenance de l'utilisateur B.

Le client A transmet également au serveur de messagerie S, via son terminal mobile TA, le « *mot magique* ». La transmission du « *mot magique »* vers le serveur se fait d'une manière classique, le terminal mobile TA du client A comportant un moyen pour le transmettre au serveur de messagerie instantanée S. Le « *mot magique* » peut être communiqué au serveur de messagerie S par un message du type SMS, MMS, e-mail, ou autre et transite par un réseau de communication convenant à l'homme du métier. Une fois reçu, le serveur de messagerie S stocke alors ce « *mot magique* » dans une zone mémoire en vue d'une comparaison ultérieure avec les messages MB, MC, MD comme décrit plus loin.

Lorsque les messages MB, MC, MD sont reçus par le serveur de messagerie S, ce dernier les analyse directement de manière à détecter la présence du « *mot magique* ». Cette analyse est réalisée en exécutant un ou plusieurs programmes, sous-programmes, microprogrammes ou autres moyens équivalents. En pratique, le serveur de messagerie S intègre un programme comportant des instructions pour analyser directement les messages reçus MB, MC, MD.
Conformément à plusieurs standards de codage de caractères tels que ASCII, ISO8859, UNICODE, WINDOWS-12555 ou autre, chaque caractère du « *mot magique* » reçoit un numéro qui peut être codé sur un, deux ou un nombre variable d'octets. Par exemple, le standard WINDOWS-12555 code le caractère « *X* » avec le numéro 58, le caractère « *Y* » avec le numéro 59 et le caractère « 2 » avec le numéro 32. Chaque « *mot magique* » correspond donc à une chaîne spécifique de numéros ou code, qui peut être analysé par le moyen d'analyse du serveur de messagerie instantanée S.
Les messages MB, MC, MD reçus par le serveur de messagerie S sont eux aussi formés par un ensemble d'éléments (mots, chiffres, ...) constitués d'une succession de caractères (lettres, chiffres, signes de ponctuation, ...) codés selon le même standard que le « *mot magique* ». Lors de l'analyse d'un message, le moyen d'analyse va étudier chaque élément dudit message et comparer si le codage d'un de ces éléments correspond au codage du « *mot magique* ».

Si le message analysé MB, MC ou MD contient le « *mot magique* », le serveur de messagerie S transmet ce message vers le terminal mobile TA du client A. Si le message analysé ne contient pas « *mot magique* », le serveur de messagerie S filtre ce message. Dans l'exemple de réalisation représentée sur la figure 1, étant donné que seul le message MB contient le « *mot magique* », il est le seul à être transmis au client A tandis que les autres messages MC et MD sont filtrés.
En pratique, le serveur de messagerie S intègre un programme comportant des instructions pour commander la transmission des messages analysés vers le terminal mobile TA du client A si lesdits messages contiennent le « *mot magique* ». Le message MB est transmis par l'intermédiaire d'un moyen de transmission classique et transite vers le terminal mobile TA du client A par un réseau de communication connu de l'homme du métier dans le domaine de la messagerie instantanée.
Les messages MC et MD sont quant à eux filtrés par l'intermédiaire d'un moyen apte à ne pas les transmettre vers le terminal mobile TA et éventuellement apte à les stocker dans une zone mémoire du serveur de messagerie S, en vue d'une consultation ultérieure par le client A. En pratique, le serveur de messagerie S intègre un programme comportant des instructions pour filtrer les messages MB et MD ne contenant pas le « *mot magique* ».

En se rapportant à la figure 1, le serveur de messagerie S peut émettre des messages d'avertissement 10C, 10D à destination des terminaux TC, TD des utilisateurs C, D dont les messages MC, MD ont été filtrés. De cette manière, les utilisateurs C, D sont avertis qu'ils ne peuvent converser avec le client A. Les messages d'avertissement 10C, 10D peuvent être du type SMS, MMS, e-mail, ou autre. Ils sont transmis par l'intermédiaire d'un moyen de transmission classique et transitent vers les terminaux TC, TD des utilisateurs C, D par un réseau de communication connue de l'homme du métier dans le domaine de la messagerie instantanée.

En se rapportant à la figure 1, le serveur de messagerie S peut également émettre un message d'alerte 10A à destination du terminal mobile TA du client A si un message analysé contient la suite de caractères et si l'utilisateur dudit terminal a clôturé sa session de messagerie instantanée. En effet, il peut être intéressant que le client A soit avertis de la réception d'un message contenant le « *mot magique* », même s'il n'a pas ouvert de session de messagerie instantanée. En pratique, le moyen de transmission du message d'alerte 10A n'est activé que si un message analysé par le serveur de messagerie S contient le « *mot magique* ». Le message d'alerte 10A peut être du type SMS, MMS, e-mail, ou autre. Il est transmis par l'intermédiaire d'un moyen de transmission classique et transite vers le terminal TA par un réseau de communication connu de l'homme du métier dans le domaine de la messagerie instantanée.

Il est avantageux que le client A puisse avoir le choix d'activer ou pas la fonction filtration par « *mot magique* ». Pour ce faire, on peut déterminer qu'en fonctionnement normal, cette fonction ne sera pas activée. Si le client A souhaite activer cette fonction, une application informatique placée dans son terminal mobile TA transmet une requête en ce sens au serveur de messagerie S. La transmission de cette requête se fait par l'intermédiaire de protocoles et réseaux de communication bien connus de l'homme du métier. Dès réception de cette requête, le serveur de messagerie S active le moyen pour analyser la présence du « *mot magique* » dans les messages qu'il reçoit. En pratique, cette requête contient un code ou une partie de code aptes, à l'exécution, à activer le moyen d'analyse.

La figure 2, représente un système de messagerie instantanée analogue à celui de la figure 1 sauf que le client A a déjà associé des règles de filtration aux utilisateurs B, C, D inscrits sur sa « *buddy list* » 2A. En se rapportant à l'exemple de la figure 2, le client A souhaite uniquement recevoir les messages en provenance de l'utilisateur B et souhaite filtrer les messages en provenance des utilisateurs C et D. Pour ce faire, une application informatique placée dans le terminal mobile TA du client A transmet une requête au serveur de messagerie S destinée à indiquer que les messages provenant de l'utilisateur B peuvent lui être communiqués (B=OK) et que les messages provenant des utilisateurs C et D doivent être filtrés (C=NO ; D=NO). La transmission de cette requête se fait par l'intermédiaire de protocoles et réseaux de communication bien connus de l'homme du métier.

Il peut être intéressant de ne pas appliquer ces règles de filtration si les messages MB, MC, MD reçus par le serveur de messagerie S contiennent le « *mot magique* ». Pour ce faire, et conformément à l'invention, lorsque le serveur de messagerie S reçoit un message MB, MC, MD émis par un utilisateur B, C, D inscrit sur la liste de contacts 2A du client A et à destination du terminal mobile TA dudit client, ledit serveur interroge ladite liste de contacts pour vérifier si une règle de filtration est associée à cet utilisateur. Cette étape est réalisée en exécutant un ou plusieurs programmes, sous-programmes, microprogrammes ou autres moyens équivalents. En pratique, le serveur de messagerie S intègre un programme comportant des instructions pour interroger la liste de contacts et vérifier si une règle de filtration est associée à l'utilisateur concerné.
En cas de vérification positive, le serveur de messagerie S analyse le message reçu pour déceler s'il contient ou pas le « *mot magique* ». Le moyen d'analyse n'est activé qu'en cas de vérification positive, l'analyse étant réalisée de la même manière que décrite précédemment. Si le message contient le « *mot magique* », il sera transmis au client A. Sinon, le message sera filtré. Dans l'exemple de réalisation représenté sur la figure 2, les messages MB et MD contiennent le « *mot magique* » tandis que le message MC ne le contient pas. Dans ce cas : le message MB est transmis au terminal mobile TA du client A ; le message MC est filtré ; le message MD est transmis au terminal mobile TA du client A même si une règle de filtration était associée à l'utilisateur D.

Dans le cas où aucune règle de filtration n'est associée à l'utilisateur B et dans le cas où le message MB ne comporte pas le « *mot magique* », deux possibilités peuvent être prévues.
Selon une première possibilité, le message MB est tout de même analysé, le moyen d'analyse étant activé. De la même façon que décrit précédemment, si ce message MB contient le « *mot magique* », le serveur de messagerie S le transmet vers le terminal mobile TA du client A. Si le message MB ne contient pas le *« mot magique* », le serveur de messagerie S le filtre.

Selon une seconde possibilité, le serveur de messagerie S n'analyse pas le message MB et le transmet automatiquement vers le terminal mobile TA du client A. Dans ce cas, le moyen d'analyse du message n'est pas activé contrairement au moyen pour transmettre le message qui l'est automatiquement.
La solution choisie pourra être directement prédéfinie par l'opérateur du service de messagerie et/ou définie par le client A lors de l'activation de la fonction filtration par « *mot magique* ».

## Revendications

1. Procédé pour filtrer des messages dans un système de messagerie instantanée pour terminaux mobiles, ledit système comportant un serveur de messagerie instantanée (S) gérant l'échange de messages entre des clients équipés de terminaux mobiles et d'autres utilisateurs (B, C, D), ledit procédé **se caractérisant par le fait qu**'à la réception d'un message (MB, MC, MD) destiné au terminal mobile (TA) d'un client (A), le serveur de messagerie (S) analyse directement ledit message reçu et :
- si le message (MB) analysé contient une suite de caractères correspondant après comparaison à une suite spécifique, le serveur de messagerie instantanée transmet ce message vers le terminal mobile (TA) du client (A),
- si le message (MC, MD) analysé ne contient pas cette suite de caractères, le serveur de messagerie instantanée filtre ce message.

2. Procédé selon la revendication 1, **dans lequel** le serveur de messagerie (S) comporte, pour au moins un client (A), une liste de contacts (2A) avec des règles de filtration associées, **et dans lequel :**
- à la réception d'un message (MB, MC, MD) émis par un utilisateur (B, C, D) inscrit sur la liste de contacts (2A) et à destination du terminal mobile (TA) dudit client (A), le serveur de messagerie (S) interroge ladite liste pour vérifier si une règle de filtration est associée à cet utilisateur,
- en cas de vérification positive, le serveur de messagerie (S) analyse le message (MB, MC, MD) reçu :
• si le message (MB, MD) analysé contient la suite spécifique de caractères, le serveur de messagerie (S) transmet ce message vers le terminal mobile (TA) du client (A),
• si le message (MC) analysé ne contient pas cette suite de caractères, le serveur de messagerie (S) filtre ce message.

3. Procédé selon la revendication 2, **dans lequel** à la réception d'un message (MB) émis par un utilisateur (B) inscrit sur la liste de contacts (2A) et à destination du terminal mobile (TA) du client (A), le serveur de messagerie (S) interroge ladite liste pour vérifier si une règle de filtration est associée à cet utilisateur, et **dans lequel** en cas de vérification négative, ledit serveur de messagerie (S) analyse le message (MB) reçu :
• si le message (MB) analysé contient la suite spécifique de caractères, le serveur de messagerie (S) transmet ce message vers le terminal mobile (TA) du client (A),
• si le message (MB) analysé ne contient pas cette suite de caractères, le serveur de messagerie (S) filtre ce message.

4. Procédé selon la revendication 2, **dans lequel** à la réception d'un message (MB) émis par un utilisateur (B) inscrit sur la liste de contacts (2A) et à destination du terminal mobile (TA) du client (A), le serveur de messagerie (S) interroge ladite liste pour vérifier si une règle de filtration est associée à cet utilisateur, et **dans lequel** en cas de vérification négative, le serveur de messagerie (S) transmet automatiquement ce message (MB) vers le terminal mobile (TA) du client (A).

5. Procédé selon l'une des revendications précédentes, **dans lequel** le terminal mobile (TA) du client (A) transmet au serveur de messagerie (S) la suite spécifique de caractères, ledit serveur stockant ladite suite de caractères dans une zone mémoire.

6. Procédé selon l'une des revendications précédentes, **dans lequel** le serveur de messagerie (S) émet un message d'avertissement (10C, 10D) à destination des terminaux (TC, TD) des utilisateurs (C, D) dont les messages (MC, MD) ont été filtrés.

7. Procédé selon l'une des revendications précédentes, **dans lequel** le serveur de messagerie (S) émet un message d'alerte (10A) à destination du terminal mobile (TA) du client (A) si un message analysé contient la suite spécifique de caractères et si ledit client a clôturé sa session de messagerie instantanée.

8. Système de messagerie instantanée de terminaux mobiles de mise en oeuvre du procédé selon l'une quelconque des revendications précédentes, comportant un serveur de messagerie instantanée (S) configuré pour gérer l'échange de messages entre des clients équipés de terminaux mobiles et d'autres utilisateurs (B, C, D), ledit système **se caractérisant par le fait que** le serveur de messagerie (S) est équipé :
- d'un moyen pour analyser directement un message (MB, MC, MD) à destination du terminal mobile (TA) d'un client (A) et comparer le contenu de ce massage à une suite spécifique de caractères formant un « mot magique »,
- d'un moyen pour transmettre ledit message (MB) analysé vers le terminal mobile (TA) du client (A) si ledit message contient une suite spécifique de caractères,
- d'un moyen pour filtrer ledit message (MC, MD) analysé s'il ne contient pas ladite suite spécifique de caractères.

9. Système selon la revendication 8, **dans lequel** le serveur de messagerie (S) comporte :
- pour au moins un client (A), une liste de contacts (2A) avec des règles de filtration associées,
- un moyen pour interroger ladite liste de contacts (2A) et vérifier si une règle de filtration est associée à un utilisateur (B, C, D) inscrit sur ladite liste ayant émis un message (MB, MC, MD) à destination du terminal mobile (TA) du client (A),
**et dans lequel** le moyen pour analyser ledit message (MB, MC, MD) est activé en cas de vérification positive ou négative.

10. Système selon la revendication 8, **dans lequel** le serveur de messagerie (S) comporte :
- pour au moins un client (A), une liste de contacts (2A) avec des règles de filtration associées,
- un moyen pour interroger ladite liste de contacts (2A) et vérifier si une règle de filtration est associée à un utilisateur (B) inscrit sur ladite liste ayant émis un message (MB) à destination du terminal mobile (TA) du client (A),
**et dans lequel** le moyen pour transmettre ledit message (MB) vers le terminal mobile (TA) du client (A) est automatiquement activé en cas de vérification négative.

11. Système selon l'une des revendications 8 à 10, **dans lequel** le terminal mobile (TA) du client (A) comporte un moyen pour transmettre au serveur de messagerie (S) la suite spécifique de caractères.

12. Système selon l'une des revendications 8 à 11, **dans lequel** le serveur de messagerie (S) comporte un moyen pour émettre un message d'avertissement (10C, 10D) à destination des terminaux (TC, TD) des utilisateurs (C, D) dont les messages (MC, MD) ont été filtrés.

13. Système selon l'une des revendications 8 à 12, **dans lequel** le serveur de messagerie (S) comporte un moyen pour émettre un message d'alerte (10A) à destination du terminal mobile (TA) du client (A), ledit moyen étant activé si un message analysé contient la suite spécifique de caractères et si ledit client a clôturé sa session de messagerie instantanée.

14. Serveur de messagerie instantanée configuré pour gérer l'échange de messages entre des clients équipés de terminaux mobiles et d'autres utilisateurs (B, C, D) dans un système de messagerie instantanée selon l'un quelconque des revendication 8 à 13, ledit serveur **se caractérisant par le fait qu**'il intègre un module de traitement comportant :
- des instructions d'analyse directe des messages (MB, MC, MD) destinés au terminal mobile (TA) d'un client (A),
- des instructions de commande de transmission des messages (MB) analysés vers le terminal mobile (TA) du client (A) si lesdits messages contiennent une suite spécifique de caractères,
- des instructions de filtration des messages (MC, MD) analysés s'ils ne contiennent pas ladite suite spécifique de caractères.
